Europäisches Patentamt

European Patent Office

Office européen des brevets

(19)

(11) Veröffentlichungsnummer: **0 003 761**
**B1**

(12)

# EUROPÄISCHE PATENTSCHRIFT

(45) Veröffentlichungstag der Patentschrift:
24.03.82

(21) Anmeldenummer: 79100311.4

(22) Anmeldetag: 02.02.79

(51) Int. Cl.³: **C 04 B 35/02, C 04 B 35/66**

(54) Feuerfeste, basische Massen und ungebrannte Steine.

(30) Priorität: 27.02.78 AT 1382/78

(43) Veröffentlichungstag der Anmeldung:
05.09.79 Patentblatt 79/18

(45) Bekanntmachung des Hinweises auf die Patenterteilung:
24.03.82 Patentblatt 82/12

(84) Benannte Vertragsstaaten:
**BE DE FR GB IT SE**

(56) Entgegenhaltungen:
**DE-A-2 457 579**
**DE-A-2 611 051**
**DE-C-1 025 317**
**DE-C-1 059 823**
**GB-A-1 360 183**
**US-A-3 030 217**
**US-A-3 333 972**

(73) Patentinhaber: Österreichisch-Amerikanische Magnesit
Aktiengesellschaft, A-9545 Radenthein(Kärnten) (AT)

(72) Erfinder: Siegl, Walter, Dipl.-Ing., Hohenheimstraße 9,
A-9500 Villach (AT)
Erfinder: Lederer, Johann, Dipl.-Ing., Gartenraststraße 7,
A-9545 Radenthein (AT)

(74) Vertreter: Eitle, Werner, Dipl.-Ing. et al, Arabellastrasse 4,
D-8000 München 81 (DE)

Feuerfeste, basische Massen und ungebrannte Steine

Die Erfindung betrifft feuerfeste, basische Massen und ungebrannte Steine mit einem Gehalt an Magnesia, insbesondere aus Magnesia und Mischungen von Magnesia mit Chromerz, die als Bindemittel Borsäure und eine organische Säure enthalten.

Bei der Herstellung feuerfester, basischer Massen und ungebrannter Steine mit einem Gehalt an Magnesia müssen den feuerfesten Ausgangsstoffen Bindemittel zugesetzt werden, um eine gewisse Festigkeit der Erzeugnisse bei niederen und mittleren Temperaturen zu erreichen. Es ist dabei erwünscht, dass das Bindemittel einerseits schon bei niedrigen Temperaturen rasch abbindet und gleichzeitig eine möglichst hohe Festigkeit des feuerfesten Materials bewirkt, und dass anderseits diese Festigkeit auch noch beim Erhitzen der feuerfesten Materialien, wie es z.B. beim Anheizen eines mit ihnen zugestellten Industrieofens oder metallurgischen Gefässes erfolgt, bei mittleren Temperaturen bis zur Bildung einer keramischen Bindung, also in der sogenannten Zwischenzone, erhalten bleibt. Ein Bindemittel, das alle diese Anforderungen im wesentlichen erfüllt, ist eine Mischung von Chromsäure oder Chromaten und Borsäure, da Chromsäure sehr hohe Anfangsfestigkeiten bei verhältnismässig niedrigen Temperaturen ergibt und Borsäure eine Bindung im kritischen Temperaturbereich von etwa 600 °C bis zum Eintreten der keramischen Bindung bewirkt, also eine Zwischenzonenfestigkeit herbeiführt. Chrom(VI)-Verbindungen haben jedoch eine gesundheitsschädliche Wirkung, und daher ist die Verwendung solcher Verbindungen für feuerfeste Zwecke bereits in zahlreichen Staaten eingeschränkt oder sogar verboten worden.

Gemäss einer früheren Erfindung der Anmelderin wird für feuerfeste Massen und ungebrannte Steine aus Magnesia und Mischungen von Magnesia und Chromerz als Bindemittel eine Mischung von Borsäure und einem wasserlöslichen Polyalkohol verwendet (DE-A 2 611 051). Dieses Bindemittel hat sich im allgemeinen sehr gut bewährt, doch liegen die damit erreichten Anfangsfestigkeiten unter den Werten, die mit Chromsäure bzw. Chromaten als Bindemittel erhalten werden können. Es sind ferner feuerfeste Mischungen mit einem Gehalt von mindestens 10% eines MgO-haltigen Kornes, das mindestens 50% MgO enthält, 0,1 bis 1,5% Aluminiumsulfat, 0,2 bis 1,5% einer organischen Säure oder eines Salzes einer solchen Säure und bis zu 1%, berechnet als $B_2O_3$, einer Borverbindung bekannt (GB-A 1 465 090 und DE-A 2 457 579). In diesen Mischungen, die insbesondere als Stampf-, Giess- oder Spritzmassen vorgesehen sind, kann als organische Säure oder als Salz derselben Zitronensäure oder ein Zitrat, und als Borverbindung eine wasserlösliche Borverbindung, wie Borsäure oder Borax, vorliegen. Diese bekannten Mischungen haben jedoch den Nachteil, dass durch das in ihnen vorhandene Aluminiumsulfat die Druckfeuerbeständigkeit beträchtlich herabgesetzt ist.

Die Aufgabe der vorliegenden Erfindung besteht nun darin, alle diese bisher bei der Bindung von feuerfesten Erzeugnissen der angeführten Art auftretenden Nachteile bzw. Mängel zu beseitigen und ein Bindemittel zu schaffen, das in jedweder Hinsicht, also bezüglich einer guten Bindung bzw. Festigkeit bei niedrigen und mittleren Temperaturen und einer guten Druckfeuerfestbeständigkeit sowie Unbedenklichkeit in gesundheitlicher Hinsicht, als befriedigend zu erachten ist.

Es wurde gefunden, dass diese Aufgabe dann gelöst werden kann, wenn als Bindemittel zusammen mit Borsäure bestimmte organische Säuren verwendet werden. Demnach betrifft die Erfindung feuerfeste, basische Massen und ungebrannte Steine mit einem Gehalt an Magnesia, insbesondere aus Magnesia und Mischungen von Magnesia mit Chromerzen, die als Bindemittel Borsäure und eine organische Säure enthalten und dadurch gekennzeichnet sind, dass sie als organische Säure eine wasserlösliche α-Hydroxycarbonsäure enthalten und von Sulfaten und Chrom(VI)-Verbindungen frei sind.

In den erfindungsgemäss verwendeten α-Hydroxycarbonsäuren liegt im einfachsten Fall nur eine einzige Hydroxylgruppe in Form einer OH-Gruppe benachbart neben einer einzigen COOH-Gruppe vor. Es können jedoch auch α-Hydroxycarbonsäuren mit mehreren OH-Gruppen und/oder COOH-Gruppen und auch partielle Salze von solchen benutzt werden, doch muss auf alle Fälle, da es sich um eine α-Hydroxycarbonsäure handelt, immer die Bedingung erfüllt sein, dass mindestens eine OH-Gruppe als solche und mindestens eine COOH-Gruppe als solche gleichzeitig nebeneinander vorliegen, d.h. also, dass selbst dann, wenn partielle Salze von α-Hydroxycarbonsäuren verwendet werden, immer noch die Gruppe –C(OH)–COOH als solche vorhanden sein muss.

Die Erfindung ist hauptsächlich für Magnesia-, Magnesitchrom- und Chrommagnesitsteine und -massen von Bedeutung, doch werden auch im Falle von Steinen und Massen aus Forsterit und Tonerde brauchbare Ergebnisse erhalten, wenn diese mindestens 10% Magnesia enthalten. Die Magnesia kann dabei in allen Fällen in Form von Sinter- oder Schmelzmagnesia vorliegen, die ungeformten Erzeugnisse sind besonders für eine Verwendung als Stampf-, Spritz-, Giess- und Mörtelmassen geeignet.

Als α-Hydroxycarbonsäuren kommen vor allem Weinsäure, Zitronensäure, Äpfelsäure, Mandelsäure, Gluconsäure oder Glycolsäure in Betracht. Wie bereits erwähnt, können auch partielle Salze von α-Hydroxycarbonsäuren verwendet werden, wenn in diesen noch eine freie OH-Gruppe und eine freie COOH-Gruppe benachbart vorliegen. Es dürfen jedoch auf keinen Fall Sulfate vorhanden sein, wobei unter dieser Bezeichnung sowohl Verbindungen mit Sulfat- als auch mit Hydrogensulfationen zu verstehen sind.

In diesem Zusammenhang ist festzuhalten, dass bereits ein zementartiges, feuerfestes Material bekannt ist, das aus einer innigen Mischung von feinverteilter, nichtplastischer Magnesia und 0,1 bis 15% mindestens einer aliphatischen Hydroxytricarbonsäure oder eines Salzes oder Esters einer solchen Säure besteht (US-A 3 333 972 und GB-A 1 017 745). Dabei können beliebige aliphatische Hydroxytricarbonsäuren, die keineswegs wasserlöslich sein müssen und auch nicht zwei benachbarte freie OH-Gruppen zu enthalten brauchen, bzw. deren Salze und Ester verwendet werden, wie Zitronensäure, ein wasserlösliches Salz derselben oder in Wasser schwer lösliches Magnesiumtrizitrat. Als weitere Zusätze können in diesen zementartigen Massen noch Kieselsäure und/oder Magnesiumsulfat, Magnesiumchlorid, Chrom(VI)-Verbindungen, Borsäure, Natriumsilikat u.a. vorhanden sein. Als Beispiele für feuerfeste Erzeugnisse, die ein feuerfestes Material und 10 bis 60% zementartiges Material dieser Art enthalten, sind gebrannte Magnesiasteine mit einem Zusatz von Kieselsäure, Magnesiumsulfat und Zitronensäure, gebrannte Chrommagnesitsteine mit einem Gehalt an Chromtrioxid und Zitronensäure, ungebrannte Magnesitchromblöcke, die Kieselsäure, Magnesiumsulfat und Zitronensäure enthalten, und ferner gebrannte und ungebrannte Magnesiasteine mit einem Gehalt an Kieselsäure, Magnesiumsulfat und Zitronensäure zu erwähnen. Diese Beispiele zeigen, dass Borsäure in diesem Zusammenhang als unwesentlich erachtet wurde (dies ergibt sich auch daraus, dass Borsäure in der analogen DE-C 1 471 297 gar nicht erwähnt ist) und in keiner Weise daran gedacht worden ist, dass der Erhalt ungebrannter, feuerfester, basischer Erzeugnisse mit einem Gehalt an Magnesia und mit einer guten Bindung bei niedrigen und mittleren Temperaturen dadurch möglich sein könnte, dass man als Bindemittel eine wasserlösliche α-Hydroxycarbonsäure zusammen mit Borsäure verwendet und gleichzeitig Sulfate und auch Chrom(VI)-Verbindungen ausschliesst. Eine weitere Betrachtung des Standes der Technik lässt vielmehr erkennen, dass Sulfate als Bindemittel zusammen mit organischen Säuren oder anderen organischen Verbindungen und Borsäure allgemein üblich waren. So wurden z.B., wie bereits oben erwähnt, feuerfeste Massen aus einem mindestens 10% MgO enthaltenden feuerfesten Aggregat, Aluminiumsulfat, einer organischen Säure oder einem Salz derselben, z.B. Zitronensäure oder einem Zitrat, und einer Borverbindung, wie Borsäure oder Borax, zur Herstellung von Strukturen durch Stampfen, Giessen oder Spritzen verwendet (DE-B 2 457 579 und GB-A 1 465 090), und von der Anmelderin wurden feuerfeste Massen und ungebrannte Steine aus Magnesia und Mischungen von Magnesia und Chromerz, die als Bindemittel eine Mischung von Borsäure und einem wasserlöslichen Polyalkohol enthielten, mit einem Zusatz von Sulfat in Form von Kieseritlösungen benutzt (DE-A 2 611 051). Alle diese bekannten Erzeugnisse sind jedoch den erfindungsgemässen Erzeugnissen unterlegen.

Schliesslich kann am Rande noch festgehalten werden, dass Hydroxycarbonsäuren ganz allgemein in verschiedenen feuerfesten Erzeugnissen als Bindemittel dienten. So wurden z.B. bestimmte aromatische Hydroxycarbonsäuren, nämlich solche, in welchen die Hydroxylgruppe am aromatischen Kern angeordnet und die Carboxylgruppe durch eine Seitenkette von 0 bis 4 C-Atomen vom aromatischen Kern entfernt ist, in Form von Alkalisalzen in Stampfmassen auf der Basis von Magnesia und gegebenenfalls Chromerz verwendet (US-A 3 030 217), und verschiedene Massen aus Tonerde oder Tonerdesilikaten z.B. mit einem Zusatz von Natriumborat und aliphatischen Hydroxycarbonsäuren, wie Zitronensäure, wurden für eine Herstellung von feuerfesten Erzeugnissen durch Vibrieren benutzt (GB-A 1 360 183).

Aus dem Stand der Technik ist somit zu ersehen, dass von keiner Seite Bedenken dagegen gesehen wurden, in basischen Massen und ungebrannten Steinen mit einem Gehalt an Magnesia als Bindemittel Hydroxycarbonsäuren, wie Zitronensäure, oder deren Salze oder Polyalkohole zusammen mit Sulfaten und auch Borsäure zu verwenden, und dass es demnach einen Gegensatz zur bisherigen Praxis darstellt, wenn nun durch die vorliegende Erfindung ausser einem Einbringen von Chromaten auch ein Einbringen von Sulfaten in solche Erzeugnisse ausgeschlossen wird.

Die erfindungsgemässen Steine sollen 0,2 bis 10%, die erfindungsgemässen Massen 0,2 bis 20% α-Hydroxycarbonsäure enthalten. Im allgemeinen ist es am zweckmässigsten, in Stampf-, Giess- und Spritzmassen 0,2 bis 10%, in Mörtelmassen 1 bis 20% der α-Hydroxycarbonsäure zu verwenden. Der Gehalt an Borsäure in Steinen gemäss der Erfindung beträgt 0,1 bis 2%, in Stampf-, Giess- und Spritzmassen 0,1 bis 5%, in Mörtelmassen 1 bis 10%.

Es ist festzuhalten, dass sich alle diese und auch die folgenden Mengenangaben in der für feuerfeste, basische Steine und Massen üblichen Weise auf Gewichtsprozente beziehen.

Die gemäss der Erfindung verwendeten Bindemittel ergeben eine Bindung, die über den gesamten in Betracht kommenden Temperaturbereich, der bei Raumtemperatur beginnt und bis zum Einsetzen der keramischen Bindung reicht, ausgezeichnete Festigkeiten liefert, die in dem Bereich bis zu etwa 200°C der Festigkeit einer Chromsäure-Borsäure-Bindung zumindest entsprechen und bei höheren Temperaturen dieser Bindung überlegen sind.

Die Erfindung wird an Hand der folgenden Beispiele, die jedoch in keiner Weise einschränkend aufzufassen sind, näher erläutert.

Beispiel 1

Als Ausgangsmaterial wurde Sintermagnesia der Zusammensetzung

| | |
|---|---|
| SiO$_2$ | 4,3% |
| Fe$_2$O$_3$ | 0,2% |
| Al$_2$O$_3$ | 0,1% |
| CaO | 1,6% |
| MgO - | 93,8% |

in einer Korngrösse von 0 bis 2 mm verwendet. Dieser Sintermagnesia wurden bei den im folgenden beschriebenen Vergleichsversuchen (Versuche 1 bis 5) verschiedene Bindemittel zugesetzt, wobei die Menge der als Ausgangsmaterial verwendeten, gekörnten Magnesia mit jeweils 100% angenommen wurde. Die Zusätze bei den einzelnen Versuchen waren wie folgt:

Versuch 1: 2% Borsäure
Versuch 2: 1,5% Chromsäureanhydrid + 0,8% Borsäure
Versuch 3: 1% Borsäure + 1,5% Weinsäure
Versuch 4: 1% Borsäure + 1,5% Zitronensäure
Versuch 5: 1% Borsäure + 1,5% Äpfelsäure

Diese Mischungen wurden nach Zusatz von 3% Wasser zu Prüfzylindern mit 50 mm Durchmesser und 50 mm Höhe verpresst, wobei der Pressdruck 19,6 N/mm$^2$ betrug.

Diese Zylinder wurden jeweils 24 Stunden lang luftgetrocknet und anschliessend 24 Stunden auf 383 K (110°C) bzw. je 4 h lang auf 1073 K (800°C), 1273 K (1000°C), 1673 K (1400°C) und 1873 K (1600°C) erhitzt. Anschliessend wurden die Kaltdruckfestigkeit (KDF), das Raumgewicht (RG) und die Porosität (Ps) der auf diese Weise behandelten Prüfzylinder bestimmt. Darüber hinaus wurde an den Zylindern, die bei 1873 K (1600°C) gebrannt worden waren, die Druckfeuerbeständigkeit (DFB) bestimmt, wobei die Belastung 2 kg/cm$^2$ betrug. Die Ergebnisse waren wie folgt:

KDF in N/mm$^2$ nach 24 Stunden Lufttrocknung und Erhitzen auf

| | – | 383 K (110°C) | 1073 K (800°C) | 1273 K (1000°C) | 1673 K (1400°C) | 1873 K (1600°C) |
|---|---|---|---|---|---|---|
| Versuch 1 | 3,0 | 3,1 | 12,4 | 19,6 | 36,7 | 31,8 |
| Versuch 2 | 6,6 | 30,7 | 15,7 | 22,2 | 29,5 | 31,6 |
| Versuch 3 | 6,6 | 33,6 | 21,1 | 24,8 | 28,3 | 36,0 |
| Versuch 4 | 3,5 | 25,0 | 20,0 | 18,5 | 28,5 | 35,0 |
| Versuch 5 | 3,5 | 32,0 | 24,0 | 25,5 | 32,3 | 36,0 |

RG in g/cm$^3$

| | | | | | | |
|---|---|---|---|---|---|---|
| Versuch 1 | 2,64 | 2,54 | 2,56 | 2,59 | 2,62 | 2,63 |
| Versuch 2 | 2,70 | 2,63 | 2,59 | 2,61 | 2,63 | 2,65 |
| Versuch 3 | 2,67 | 2,64 | 2,63 | 2,64 | 2,65 | 2,68 |
| Versuch 4 | 2,70 | 2,64 | 2,64 | 2,67 | 2,67 | 2,69 |
| Versuch 5 | 2,69 | 2,70 | 2,66 | 2,67 | 2,70 | 2,72 |

Ps in % nach 24 Stunden Lufttrocknung und Erhitzen auf

| | – | 383 K (110°C) | 1073 K (800°C) | 1273 K (1000°C) | 1673 K (1400°C) | 1873 K (1600°C) |
|---|---|---|---|---|---|---|
| Versuch 1 | 18,6 | 25,4 | 26,3 | 26,0 | 25,0 | 25,1 |
| Versuch 2 | 20,1 | 23,1 | 26,6 | 26,9 | 25,8 | 25,2 |
| Versuch 3 | – | 20,9 | 24,9 | 24,2 | 24,6 | 23,5 |
| Versuch 4 | 14,6 | 23,6 | 24,5 | 21,8 | 23,6 | 23,6 |
| Versuch 5 | – | 18,9 | 24,4 | 23,9 | 22,8 | 23,3 |

| DFB in K (°C) | $t_a$ | $t_B$ | Versuch abgebrochen bei | abgesunken |
|---|---|---|---|---|
| Versuch 1 | 1798 (1525) | 1883 (1610) | – | – |
| Versuch 2 | > 1968 (1695) | > 1968 (1695) | 1968 (1695) | 0,0% |
| Versuch 3 | > 1968 (1695) | > 1968 (1695) | 1968 (1695) | 0,1% |
| Versuch 4 | > 1968 (1695) | > 1968 (1695) | 1968 (1695) | 0,3% |
| Versuch 5 | > 1968 (1695) | > 1968 (1695) | 1968 (1695) | 0,2% |

Die Versuchsergebnisse zeigen, dass die Kombinationen von Borsäure mit einer α-Hydroxycarbonsäure (Versuche 3 bis 5) der reinen Borsäurebindung (Versuch 1) wesentlich überlegen und der Chromatbindung (Versuch 2) praktisch ebenbürtig sind.

Beispiel 2

Dieses Beispiel zeigt, dass das Bindemittel gemäss der Erfindung auch für andere Typen von Magnesia als die in Beispiel 1 angeführte und ferner für Mischungen von Magnesia und Chromerz brauchbar ist.

Der folgende Versuch 1 bezieht sich auf ein durch gemeinsames Brennen von Rohmagnesit und Chromerz im Drehrohrofen erhaltenes Sintermaterial, der Versuch 2 auf eine eisenreiche Sintermagnesia vom alpinen Typ. Die Zusammensetzungen und Körnungen der Ausgangsmaterialien waren wie folgt:

|  | Versuch 1 | Versuch 2 |
|---|---|---|
| $SiO_2$ | 2,0% | 3,0% |
| $Fe_2O_3$ | 10,0% | 4,0% |
| $Al_2O_3$ | 5,5% | 0,5% |
| $Cr_2O_3$ | 21,0% | 0,5% |
| CaO | 1,0% | 2,0% |
| MgO | 60,5% | 90,0% |
| Körnung | 0–2 mm | 0–5 mm |

Diesen Ausgangsmaterialien wurden jeweils 1% Borsäure und 1,5% Weinsäure als Bindemittel zugesetzt. Dann wurden die erhaltenen Mischungen nach Zusatz von 3% Wasser unter einem Pressdruck von 19,6 N/mm² zu Prüfzylindern mit 50 mm Durchmesser und 50 mm Höhe verpresst. Die Zylinder wurden auf die in Beispiel 1 beschriebene Weise getrocknet und erhitzt, und dann wurden die Kaltdruckfestigkeit, das Raumgewicht und die Porosität geprüft. Nach Brand bei 1873 K (1600 °C) wurde auch die DFB bestimmt.

KDF in N/mm² nach 24 Stunden Lufttrocknung und Erhitzen auf

|  | – | 383 K (110°C) | 1073 K (800°C) | 1273 K (1000°C) | 1673 K (1400°C) | 1873 K (1600°C) |
|---|---|---|---|---|---|---|
| Versuch 1 | 4,0 | 32,4 | 20,2 | 30,9 | 43,5 | 37,8 |
| Versuch 2 | 3,5 | 30,2 | 22,3 | 28,6 | 34,4 | 42,0 |

RG in g/cm³

|  | – | 383 K (110°C) | 1073 K (800°C) | 1273 K (1000°C) | 1673 K (1400°C) | 1873 K (1600°C) |
|---|---|---|---|---|---|---|
| Versuch 1 | – | 2,99 | 2,86 | 2,88 | 2,91 | 2,92 |
| Versuch 2 | 2,45 | 2,40 | 2,38 | 2,41 | 2,42 | 2,43 |

Ps in %

|  | – | 383 K (110°C) | 1073 K (800°C) | 1273 K (1000°C) | 1673 K (1400°C) | 1873 K (1600°C) |
|---|---|---|---|---|---|---|
| Versuch 1 | – | 21,2 | 24,2 | 23,4 | 22,7 | 23,1 |
| Versuch 2 | 20,2 | 24,2 | 26,7 | 25,9 | 24,0 | 23,9 |

DFB in K (°C)

|  | $t_a$ | $t_B$ | Versuch abgebrochen bei | abgesunken |
|---|---|---|---|---|
| Versuch 1 | >1968 (1695) | >1968 (1695) | 1968 (1695) | 0,1% |
| Versuch 2 | – | 1630 (1357) | – | – |

Beispiel 3

Zur Feststellung der Wirkung eines Zusatzes von Sulfaten zu den Bindemitteln gemäss der Erfindung wurde die Druckfeuerbeständigkeit (DFB) von Mischungen untersucht, deren feuerfestes Material eine Sintermagnesia mit folgender Zusammensetzung war:

| MgO | 93,5% |
| $SiO_2$ | 4,1% |
| $Fe_2O_3$ | 0,5% |
| $Al_2O_3$ | 0,2% |
| $Cr_2O_3$ | 0,1% |
| CaO | 1,6% |

Die Sintermagnesia, von der 65% in einer Körnung von 0 bis 2 mm und 35% in einer Korngrösse von unter 0,315 mm vorlagen, wurde, jeweils bezogen auf 100% Sintermagnesia, mit 3% Wasser und folgenden Bindemitteln vermischt:

| Mischung | Bindemittel |
|---|---|
| 1 | 1% Borsäure + 1,5% Weinsäure |
| 2 | 1% Borsäure + 1,5% Weinsäure + 0,5% $Al_2(SO_4)_3 \cdot 18H_2O$ |
| 3 | 1% Borsäure + 1,5% Weinsäure + 0,5% $NaHSO_4$ |

Diese Mischungen wurden jeweils unter einem Druck von 19,6 N/mm² zu zylindrischen Prüfkörpern von 50 mm Höhe und 50 mm Durchmesser verpresst, die in drei Versuchsreihen A, B und C bei jeweils 1600 °C gebrannt wurden, worauf unter einer Belastung von 2 kg/cm² ihre DFB bestimmt wurde. Dabei wurden folgende Ergebnisse erhalten:

| Versuchs-reihe | Mischung | $t_a$ K (°C) | $t_B$ K (°C) | Versuch abgebrochen bei | abgesunken |
|---|---|---|---|---|---|
| A | 1 | > 1968 (1695) | > 1968 (1695) | 1968 (1695) | 0,1% |
|   | 2 | 1748 (1475) | 1773 (1500) | – | – |
|   | 3 | 1713 (1440) | 1798 (1525) | – | – |
| B | 1 | > 1968 (1695) | > 1968 (1695) | 1968 (1695) | 0,4% |
|   |   | 1733 (1460) | 1743 (1470) | – | – |
| C | 1 | > 1968 (1695) | > 1968 (1695) | 1968 (1695) | 0,3% |
|   |   | 1813 (1540) | 1858 (1585) | – | – |

Aus allen drei Versuchsreihen geht deutlich hervor, dass der Zusatz von 0,5% Aluminium- oder Natriumhydrogensulfat die Druckfeuerbeständigkeit um mindestens 150 °C senkt und dass die sulfathaltigen Prüfkörper bereits bei einer Temperatur von unter 1873 K (1600 °C) bei einer Belastung von 2 kg/cm² ihre Festigkeit völlig verlieren, wogegen die sulfatfreien Prüfkörper selbst bei fast 1973 K (1700 °C) nur ein sehr geringes Absinken aufweisen und ihre Festigkeit erst bei Temperaturen verlieren, die mit der DFB-Apparatur nicht mehr erreicht werden können.

## Patentansprüche

1. Feuerfeste, basische Massen und ungebrannte Steine mit einem Gehalt an Magnesia, insbesondere aus Magnesia und Mischungen von Magnesia mit Chromerz, die als Bindemittel Borsäure und eine organische Säure enthalten, dadurch gekennzeichnet, dass sie als organische Säure eine wasserlösliche α-Hydroxycarbonsäure enthalten und von Sulfaten und Chrom(VI)-Verbindungen frei sind.

2. Feuerfeste, basische Massen und ungebrannte Steine nach Anspruch 1, dadurch gekennzeichnet, dass sie als α-Hydroxycarbonsäure, Weinsäure, Zitronensäure, Äpfelsäure, Mandelsäure, Gluconsäure oder Glycolsäure enthalten.

3. Feuerfeste, basische Massen nach Anspruch 1 oder 2, dadurch gekennzeichnet, dass sie einen Gehalt von 0,2 bis 20% α-Hydroxycarbonsäure aufweisen.

4. Feuerfeste, basische Steine nach Anspruch 1 oder 2, dadurch gekennzeichnet, dass sie 0,2 bis 10% α-Hydroxycarbonsäure enthalten.

## Claims

1. Basic refractories and non-fired bricks containing magnesia, exspecially magnesia and mixtures of magnesia with chrome ore, which contain as binder boric acid and an organic acid, characterized in that they contain as organic acid a water-soluble α-hydroxy carboxylic acid and that they are free of sulfate and chrome (VI)-compounds.

2. Refractories and non-fired bricks according to claim 1, characterized in that they contain as α-hydroxy carboxylic acid, tartaric acid, citric acid, malic acid, mandelic acid, gluconic acid or glycolic acid.

3. Basic refractories according to claims 1 or 2, characterized in that they contain 0.2 to 20% α-hydroxy carboxylic acid.

4. Basic refractory bricks according to claims 1 or 2, characterized in that they contain 0.2 to 10% α-hydroxy carboxylic acid.

## Revendications

1. Masses basiques, réfractaires et briques crues ayant une teneur en magnésie, en particulier en magnésie et en mélanges de magnésie avec du minerai de chrome, qui contiennent comme liants de l'acide borique et un acide organique, caractérisées par le fait qu'elles contiennent comme acide organique: un acide α-hydroxycarboxylique soluble dans l'eau et qu'elles sont exemptes de sulfates et de composés du chrome (VI).

2. Masses basique, réfractaires et briques crues selon la revendication 1, caractérisées par le fait qu'elles contiennent comme acide α-hydroxycarboxylique: l'acide tartrique, l'acide citrique, l'acide malique, l'acide mandélique, l'acide gluconique ou l'acide glycolique.

3. Masses basiques, réfractaires selon les revendications 1 ou 2, caractérisées par le fait qu'elles présentent un taux d'acide α-hydroxycarboxylique de 0,2 à 20%.

4. Briques basiques, réfractaires selon les revendications 1 ou 2, caractérisées par le fait qu'elles contiennent 0,2 à 10% d'acide α-hydroxycarboxylique.